# EUROPÄISCHE PATENTANMELDUNG

(11) **EP 1 533 644 A1**
(43) Veröffentlichungstag der Anmeldung: **25.05.2005**
(21) Anmeldenummer: 04027369.0
(22) Anmeldetag: 18.11.2004
(51) Int. Cl.: G02B 21/36, G02B 21/22

(54) **Mikroskopkamera**

(30) Priorität: 21.11.2003 DE 10355527
(71) Anmelder: CARL ZEISS JENA GmbH, 07745 Jena (DE)
(72) Erfinder: Winterot, Johannes, 07745 Jena (DE); Knoblich, Johannes, 07747 Jena (DE); Kaufhold, Tobias, 07749 Jena (DE); Tielebier, Hanna, 19336 Quitzöbel (DE); Osten, Günter, 07749 Jena (DE)

(57) **Zusammenfassung**

Die Erfindung betrifft eine Mikroskopkamera, welche insbesondere zum Aufnehmen digitaler Bilder in der Stereomikroskopie geeignet ist

Dabei ist die komplette Kamera inklusive Umlenkelement für einen der Stereostrahlengänge, Bildaufnahmechip, Steuer- und Verarbeitungseinheit, Monitor und Datenschnittstellen in einem Zwischentubus integriert.

## Beschreibung

Die Erfindung betrifft eine Mikroskopkamera, welche insbesondere zum Aufnehmen digitaler Bilder in der Stereomikroskopie geeignet ist.

Der Einsatz von Digitalkameras in der Mikrofotografie löst die herkömmliche Kleinbild-Mikrofotografie zunehmend ab. Das mikroskopische Bild kann mit Digitalkameras auf Speichermedium wie "Memory-Stick" bzw. "PC-Card" oder im PC gespeichert und mit entsprechender Software bearbeitet werden; auch können die Bilddaten auf Videomonitoren bzw. Videoprintern wiedergegeben werden. Wie schon von der Kleinbild-Mikrofotografie und Videomikroskopie her bekannt, können die Digitalen Kameras auf verschiedene Weise am Mikroskop adaptiert werden.

### a) Anpassung Digitaler Kompaktkameras mit festem Objektiv

Dabei werden handelsübliche digitale Kompaktkameras zur Aufnahme mikroskopischer Bilder genutzt, indem sie an vorhandene Fotoausgänge von Mikroskopen angepasst werden. Für diese Adaption wird ein mechanisch-optischer Adapter benötigt,
- der am Okular-oder Fotostutzen ansetzbar ist,
- der die Digitale Kompaktkamera in der optischen Achse des Mikroskops fixiert, und
- der eine Abbildungsoptik enthält (Okular, Projektionslinse, Linsensystem), die das mikroskopische Bild zusammen mit dem auf Entfernung "Unendlich" (∞) eingestellten Kameraobjektiv in die Kamerabildebene abbildet, wobei der zur Kamera geführte Strahlengang der direkte Mikroskopstrahlengang oder der durch ein geeignetes Teilerelement aus dem direkten Mikroskopstrahlengang ausgelenkte Teilstrahlengang sein kann.

Damit das Kamerabild beim Fahren des Kamera-Objektivzooms in Richtung Telebereich (Optischer Zoombereich) beschnittfrei und formatfüllend wird und ab einer bestimmten Objektivbrennweite auch bleibt, muss die Austrittspupille des Strahlenganges nach der Abbildungsoptik des Adapters in den Eintrittspupillen-"Schlauch" (Lage und Größe der Eintrittspupille ändert sich mit der Brennweitenänderung beim Zoomen) des auf Entfernung "Unendlich" (∞) eingestellten Kameraobjektives passen. D.h. die Austrittspupille der Adapteroptik muss in einem möglichst großen Abstand über der Adapteroptik liegen und der Teil des Adapters mit dem Kameraanschluss muss zum Adapterteil mit Abbildungsoptik über einen hinreichend großen Wegbereich in Richtung der optischer Achse verschieb-und klemmbar sein. Diese Einstellung und später dann das mikroskopische Bild kann auf dem LCD-Monitor oder im Sucher der Kamera beobachtet werden. Solch eine Adaption wird von der Anmelderin in Form von Okularadaptern zu den Zeiss-Stereomikroskopen DV4 und DR angeboten.

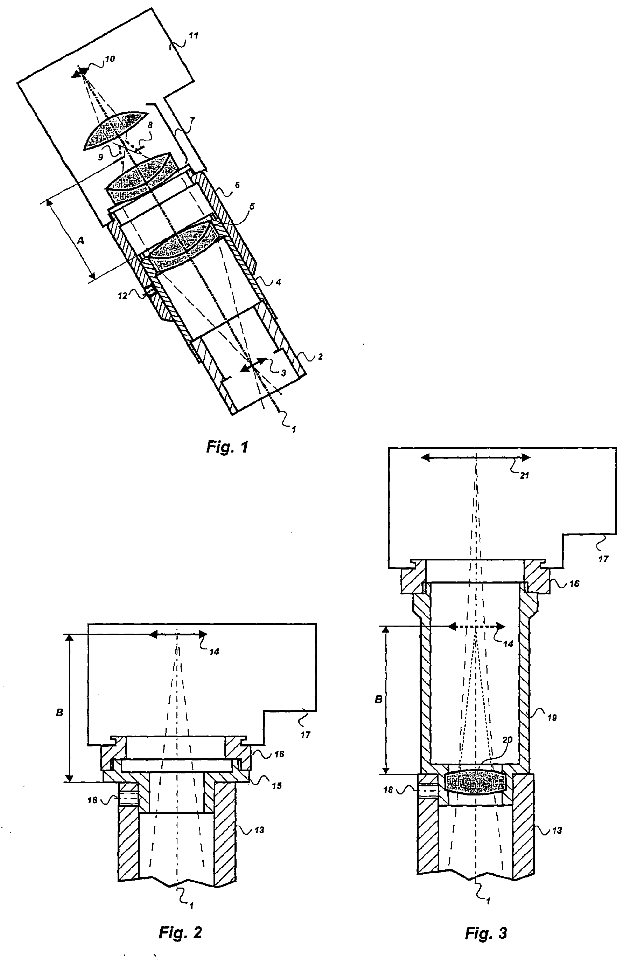

Ein Ausführungsbeispiel einer solchen Adaption zeigt ***Fig. 1****.* In einem der vom Körper des Stereomikroskopes in den Okularstutzen ***2*** kommenden stereomikroskopischen Strahlengänge ***1*** wird das Mikroskopzwischenbild ***3*** von der Okularlinse ***5*** nach Unendlich in das auf Entfernung "Unendlich" (∞) eingestellte Kameraobjektiv ***7*** und von diesem in die Bildebene ***10*** der Digitalen Kompaktkamera ***11*** abgebildet. Das untere Adapterteil ***4*** mit Okularlinse ***5*** ist am Okularstutzen 2 aufgeschraubt, der obere Teil des Adapters 6 mit dem Kameraanschluss in das Objektivgewinde des Kameraobjektives ***7*** eingeschraubt. Die Austrittspupille ***8*** der Okularlinse ***5*** liegt in einem möglichst großen Abstand ***A*** über der Okularlinse ***5.*** Der obere Teil des Adapters ***6*** mit Kamera ***11*** wird relativ zum unteren Adapterteil ***4*** in Richtung der optischen Achse verschoben. Liegt die Austrittspupille ***8*** der Okularlinse ***5*** im Eintrittspupillen-"Schlauch" ***9*** des Kameraobjektives ***7,*** wird der obere Teil des Adapters ***6*** mit der Kamera ***11*** zum Mikroskopbild ausgerichtet und auf dem unteren Adapterteil 4 mittels Klemmschraube ***12*** fixiert.

Andere Ausführungsformen solcher Adapter (mit Halterung im Objektivgewinde, im Kamera-stativgewinde, oder in einer der Kamera angepassten Form) sind beschrieben in den Schriften DE 20010421, US 2002/0012045 A1, US 2001/0048549, DE 29821977, US 5835807.

Allen diesen Lösungen haftet der Nachteil an, dass diese Adapter im wesentlichen an die optischen Daten der digitalen Kameras angepasst sein müssen und damit im Prinzip für jede neue Digitalkamera ein eigener Adapter notwendig ist um eine optimale Bildqualität zu erreichen.

### b) Anpassung Digitaler Spiegelreflex-Kamera-Grundkörper ohne Objektiv

Eine Adaption dieser Kameras ohne Objektiv am Anschlussstutzen des Video-bzw. Fotoausgangs eines Stereomikroskops ist möglich, wenn das Mikroskopzwischenbild in einem definierten Abstand oberhalb der Auflagefläche des Anschlussstutzens liegt. Die Ebenen von Okularzwischenbild und Kamerabild sind parfokal.

Für eine solche Adaption werden mechanisch-optische Adapter benötigt,
- die am Anschlussstutzen des Video-/Fotoausgangs mit einem definierten Abstand des Mikroskopzwischenbildes oberhalb der Auflagefläche ansetzbar sind,
- die die Digitale Kompaktkamera über T2-Anschluss und Objektivwechselstelle in der optischen Achse des Mikroskopes fixieren, und
- mit deren Hilfe das Mikroskopzwischenbild direkt (ohne Optik) oder vergrößert (mit Optik = Bildversetzungssystem) in den Sensorebenen der Kameras zu liegen kommt,
wobei der zum Anschlussstutzen des Video-/Fotoausgangs geführte Strahlengang der umgelenkte direkte Mikroskopstrahlengang oder der durch ein geeignetes Teilerelement aus dem direkten Mikroskopstrahlengang ausgelenkte Teilstrahlengang sein kann.

Zwei Ausführungsbeispiele möglicher Adaptionen zeigen ***Fig. 2*** und ***Fig. 3.*** Der Anschlussstutzen ***13*** des Video-/Fotoausgangs eines Stereomikroskopes ist so gestaltet, dass in einem der vom Körper des Stereomikroskopes kommenden stereomikroskopischen Strahlengänge ***1*** das Mikroskopzwischenbild ***14*** in einem definierten Abstand ***B*** oberhalb der Auflagefläche des Anschlussstutzens ***13*** entsteht; nach Ausrichtung der Kamera ***17*** zum Mikroskopbild wird der Adapter mittels Klemmschraube ***18*** im Anschlussstutzen ***13*** fixiert. Im ersten Ausführungsbeispiel ***Fig. 2*** ist die Digitale Spiegelreflex-Kamera ***17*** über einen zur Kamera passenden handelsüblichen T2-Adapter ***16*** und ein T2-Anschlussstück ***15*** am Anschlussstutzen ***13*** des Video-bzw. Fotoausgangs adaptiert. Dabei ist das T2-Anschlussstück ***15*** mit dem standardisierten T2-Außengewinde so gestaltet, dass es am Anschlussstutzen ***13*** ansetzbar ist, und seine Auflagenhöhe entsprechend dem definierten Abstand B und dem standardisierten T2-Auflagenmaß ausgeführt ist, sodass das Mikroskopzwischenbild ***14*** in der Sensorebene der Kamera zu liegen kommt.

Im zweiten Ausführungsbeispiel ***Fig. 3*** ist die Digitale Spiegelreflex-Kamera ***17*** über einen zur Kamera passenden handelsüblichen T2-Adapter***16*** und einem T2-Anschluss für Spiegelreflex-Kameras ***19*** am Anschlussstutzen ***13*** des Video-bzw. Fotoausgangs adaptiert. Der T2-Anschluss für Spiegelreflex-Kameras ***19*** ist am Anschlussstutzen ***13*** ansetzbar; er enthält eine Bildversetzungsoptik ***20*** die das Mikroskopzwischenbild ***14*** aus dem definierten Abstand ***B*** in eine weiter oberhalb liegende Bildebene ***21*** vergrößernd abbildet; die Bildebene ***21*** liegt entsprechend dem standardisierten T2-Auflagenmaß über dem T2-Anschluss, sodass die Bildebene ***21*** ebenfalls in der Sensorebene der Kamera zu liegen kommt.

Nachteilig hierbei ist, dass die Anpassung Digitaler Spiegelreflex-Kameras ohne Objektiv über den T2-Anschluss auf Bauteilen zur Anpassung von 35mm-Kleinbildfilm-Spiegelreflex-Kameras ohne Objektiv über den T2-Anschluss basiert. Bei der Adaption mit T2-Anschlussstück ohne Optik sind die Diagonalen der Flächensensoren Digitaler Spiegelreflex-Kameras (ca. 33...17mm) größer bzw. gleich dem Mikroskopzwischenbild; das von den Digitalen Spiegelreflex-Kameras erfasste Bildformat ist mehr oder weniger beschnitten. Bei der Adaption mit vergrößernder Bildversetzungsoptik im T2-Anschluss für Spiegelreflex-Kameras sind die Diagonalen der Flächensensoren Digitaler Spiegelreflex-Kameras (ca. 33...17mm) kleiner als das für Kleinbild-Spiegelreflex-Kameras vergrößerte Bild (ca. 44 mm); es wird nur ein mehr oder weniger großer Bildausschnitt erfasst. Um möglichst große Bildausschnitte beschnittfrei wiederzugeben, wären für jede Größe der Flächensensoren T2-Anschlüsse mit speziellen Faktoren der Vergrößerungsoptik notwendig.

### c) Anpassung Digitaler Videokameras mit z.B. C-mount-Anschluss

Beispiele Digitaler Videokameras mit C-mount-Anschluss_sind die Olympus DP 10, die Olympus DP 50, die Nikon DXM1200 u.a. Neben den durch den Verwendungszweck bestimmten äußeren Abmessungen ist die Chipgröße (standardisiert in Zollmaßen) ein wesentliches Unterscheidungsmerkmal. Eine Adaption dieser Kameras an den Anschlussstutzen des Video-bzw. Fotoausgangs eines Stereomikroskopes ist möglich, wenn das Mikroskopzwischenbild in einem definierten Abstand oberhalb der Auflagefläche des Anschlussstutzens liegt. Die Ebenen von Okularzwischenbild und Kamerabild sind parfokal. Bei der Olympus DP 10 kann das Kamerabild auf dem LCD-Monitor der Kamera beobachtet werden.

Für eine solche Adaption werden mechanisch-optische Adapter benötigt,
- die am Anschlussstutzen des Video-/Fotoausgangs mit einem definierten Abstand des Mikroskopzwischenbildes oberhalb der Auflagefläche ansetzbar sind,
- die die Digitale Videokamera über den C-mount-Anschluss in der optischen Achse des Mikroskops fixieren, und
- mit deren Hilfe das Mikroskopzwischenbild direkt (ohne Optik) oder um einen durch Chipgröße und Zwischenbildgröße bestimmten Faktor verkleinert (mit Optik = Bildversetzungssystem) in den Sensorebenen der Kameras zu liegen kommt,
wobei der zum Anschlussstutzen des Video-/Fotoausgangs geführte Strahlengang der umgelenkte direkte Mikroskopstrahlengang oder der durch ein geeignetes Teilerelement aus dem direkten Mikroskopstrahlengang ausgelenkte Teilstrahlengang sein kann.

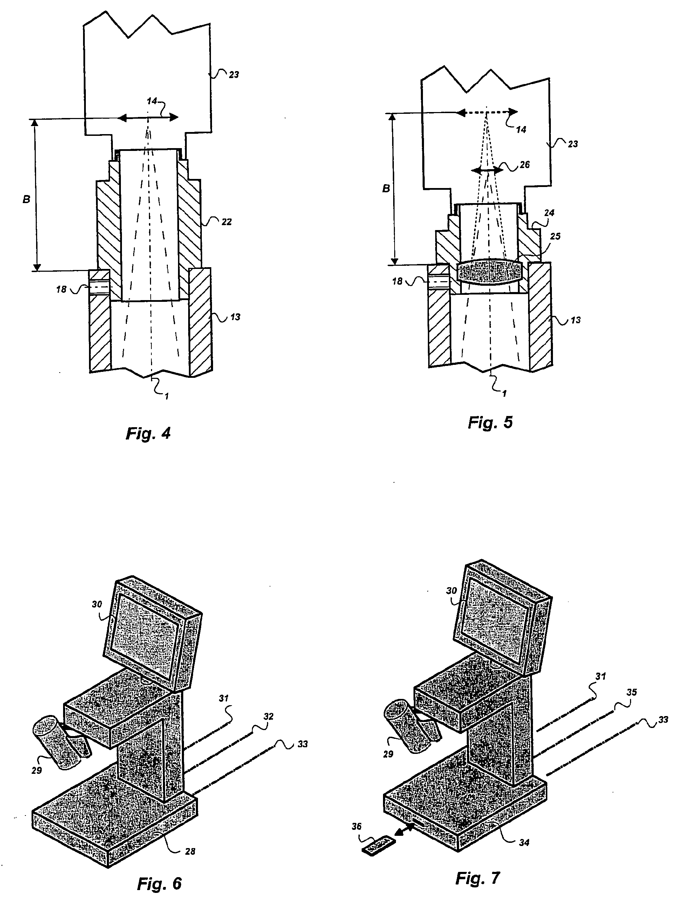

Zwei Ausführungsbeispiele möglicher Adaptionen zeigen ***Fig. 4*** und ***Fig. 5.*** Der Anschlussstutzen ***13*** des Video-/Fotoausgangs eines Stereomikroskops ist so gestaltet, dass in einem der vom Körper des Stereomikroskops kommenden stereomikroskopischen Strahlengänge ***1*** das Mikroskopzwischenbild ***14*** in einem definierten Abstand ***B*** oberhalb der Auflagefläche des Anschlussstutzens ***13*** entsteht; nach Ausrichtung der Kamera ***23*** zum Mikroskopbild wird der Adapter mittels Klemmschraube ***18*** im Anschlussstutzen ***13*** fixiert. Im ersten Ausführungsbeispiel ***Fig. 4*** ist die Digitale Videokamera ***23*** über einen zur Kamera passenden C-mount-Adapter ***22*** am Anschlussstutzen ***13*** des Video-/Fotoausgangs adaptiert. Dabei ist der C-mount-Adapter ***22*** mit dem standardisierten C-mount-Anschluss so gestaltet, dass es am Anschlussstutzen ***13*** ansetzbar ist, und seine Auflagenhöhe entsprechend dem definierten Abstand ***B*** und dem standardisierten C-mount-Auflagenmaß ausgeführt ist, sodass das Mikroskozwischenbild ***14*** in der Sensorebene der Kamera zu liegen kommt. Im zweiten Ausführungsbeispiel ***Fig. 5*** ist ein Digitale Videokamera mit kleinerer Chipgröße ***26*** über einen zur Kamera passenden C-mount-Adapter ***24*** am Anschlussstutzen ***13*** des Video-bzw. Fotoausgangs adaptiert. Der C-mount-Adapter ***24*** ist am Anschlussstutzen ***13*** ansetzbar; er enthält eine Bildversetzungsoptik ***25*** die das Mikroskopzwischenbild ***14*** aus dem definierten Abstand ***B*** in eine weiter unterhalb liegende Bildebene ***26*** verkleinernd abbildet; die Bildebene ***26*** liegt entsprechend dem standardisierten C-mount-Auflagenmaß über dem C-mount-Anschluss, sodass die Bildebene ***26*** ebenfalls in der Sensorebene der Kamera zu liegen kommt.

Diese Lösungen weisen eine Reihe von Nachteilen auf: Zu jeder Kamerachip-Größe muss der passende Adapter gewählt werden. Bei Adaption Digitaler Videokameras mit kleineren Chipgrößen (2/3"-1/2"-1/3"-¼") über den C-mount-Adapter ohne Optik wird nur ein mehr oder weniger verkleinerter Bildausschnitt aus dem Mikroskopzwischenbild erfasst; bei der Adaption Digitaler Videokameras über einen C-mount-Adapter mit einer für den jeweiligen Kamerachip zu stark verkleinerten Bildversetzungsoptik ist das Bildformat nicht vollständig ausgefüllt, sondern mehr oder weniger beschnitten.

### d) Digitale Kamera integriert im kompakten Mikroskop

Bekannt ist das portable Videomikroskop PV 10 der Firma Olympus, bestehend aus den einzelnen Komponenten Videokamera mit Beleuchtung, Kabel, Steuereinheit und LCD-Monitor. Das Ansetzen der Komponenten Videokamera am Mikroskopstativ erlaubt die Dokumentation des mikroskopischen Bildes, das in der Steuereinheit auf einer PC-Karte gespeichert werden kann. Video-Monitor, Video-Drucker und PC sind an der Steuereinheit anschließbar und mit dieser funktionsfähig.

Die Firma Sony bietet die Videomikroskope TW-TL1S / TW-TL1SP / TW-TL10S / TW-TL10SP / TW-TL5MP / TW-TL10MP an, bei denen das mikroskopische Bild okularlos auf einem 7"-LCD-Display des Mikroskops beobachtet werden kann, die Ausgabedaten auf einen Videomonitor bzw. Videoprinter wiedergegeben oder als Eingabedaten an einen PC gesendet werden können. Mit den Videomikroskopen TW-TL5MP und TW-TL10MP ist es zusätzlich möglich, das angezeigte Monitorbild auf dem Speichermedium "Memory-Stick" zu speichern. Die auf dem Memory-Stick gespeicherten Bilder können abgerufen und auf dem Monitor angezeigt oder später zur weiteren Verarbeitung auf einen PC geladen werden. Bildwiedergabe- und Speichereinrichtung sind ohne zusätzliche mechanisch-optische Adaption stets an ein kompaktes Mikroskop gebunden.

***Fig. 6*** zeigt ein Ausführungsbeispiel der Videomikroskope TW-TL..S; ***Fig. 7*** ein Ausführungsbeispiel der Videomikroskope TW-TL..MP. Bezugsziffer ***28*** bezeichnet das Videomikroskop TW-TL..S, Bezugsziffer ***34*** bezeichnet das Videomikroskop TW-TL..MP, beide inclusive Beleuchtung und Steuerelektronik; Bezugsziffer ***29*** bezeichnet die schwenkbare Videokamera, Bezugsziffer ***30*** den LCD-Monitor, Bezugsziffer ***31*** den S-Video-Ausgang, Bezugsziffer ***32*** den Composite-Video-Ausgang, Bezugsziffer ***33*** den Eingang der DC-Spannungsversorgung, Bezugsziffer 35 den USB-Ausgang und Bezugsziffer 36 bezeichnet den Memory-Stick mit Einschub.

Bei den Videomikroskopen TW-TL5MP und TW-TL10MP ist nun das digitalisierte Foto-/Video-Bildaufnahmesystem mit seinen Ausgängen im Mikroskop integriert. Digitale Foto-und Videokameras brauchen nicht mehr, wie bei herkömmlichen Fotomikroskopen mit integrierten Foto- bzw. Videoausgängen üblich, von außen angesetzt zu werden.

### e) Digitale Kameraeinheit als Zwischentubus mit Bildausspiegelung

Zwischentuben, in denen durch Strahlenteilung oder ein-/ausschaltbare Spiegel und nachgeschaltete Optik der mikroskopische Strahlengang zur Lichtmessung auf lichtelektrische Sensoren gelenkt wird, sind aus den von fast allen Mikroskopherstellern angebotenen mikrofotografischen Einrichtungen mit Belichtungsmess- und Steuereinrichtungen bekannt; z.B. von der Anmelderin die mikrofotografische Aufsetzkamerasysteme MC200 und MC80, von der Firma Leica die Fotoautomaten MPS 30/60, von der Firma Nikon das fotomikrografische System FX III, von der Firma Olympus die fotomikrografischen Automatiksysteme PM-IOAK35/20/30. Messfeldgröße, Messgenauigkeit und Messprinzip bestimmen dabei die Abbildungsverhältnisse und die Abbildungsqualität der Optik zur Lichtmessung. Bei einer anderen Ausführungsform solcher Zwischentuben ist der lichtelektrische Sensor eine Videokamera oder eine CCD-Videokamera. Das Bild auf dem Sensor der Videokamera wird zur Bestimmung der Belichtungszeit einer mikrofotografischen Kamera und/oder zum Betrieb eines passiven Autofokussystems genutzt, es kann aber auch auf dem Monitor betrachtet werden. Ein solches Verfahren ist in der DE 19517476 A1 beschrieben. In einer weiteren Ausführungsform solcher Zwischentuben ist der lichtelektrische Sensor eine Analog-Videokamera mit Digitalsteuerung. Als solche sind bekannt der Leica IC A Videomodul mit integriertem CCD und Kamerasteuerung PAL/NTSC und der Leica IC A-180 Videomodul mit integriertem CCD und Kamerasteuerung PAL/NTSC. In beiden letztgenannten Fällen wird mit einer geeigneten Optik nahezu das gesamte mikroskopische Zwischenbild mit einer für die Bildwiedergabe geeigneten Qualität auf den Kamerasensor abgebildet.

Eine solche Adaption erfolgt mit Zwischentuben
- die direkt zwischen Mikroskopkörper und Beobachtungstubus eingesetzt werden,
- in denen Strahlenteiler oder Umlenkspiegel, Sensor-Anpassoptik, CCD-Kamerasensor und Kamerasteuerung integriert sind und Strahlenteiler/ Umlenkspiegel, Sensor-Anpassoptik, CCD-Kamerasensor in der optischen Achse des ausgespiegelten Mikroskopstrahlenganges fixiert sind,
- deren Sensor-Anpassoptik den Maßen des Mikroskopstrahlengangs und der Größe des CCD-Kamerasensors angepasst ist (Verkleinerung um einen durch Chip- und Zwischenbildgröße bestimmten Faktor).

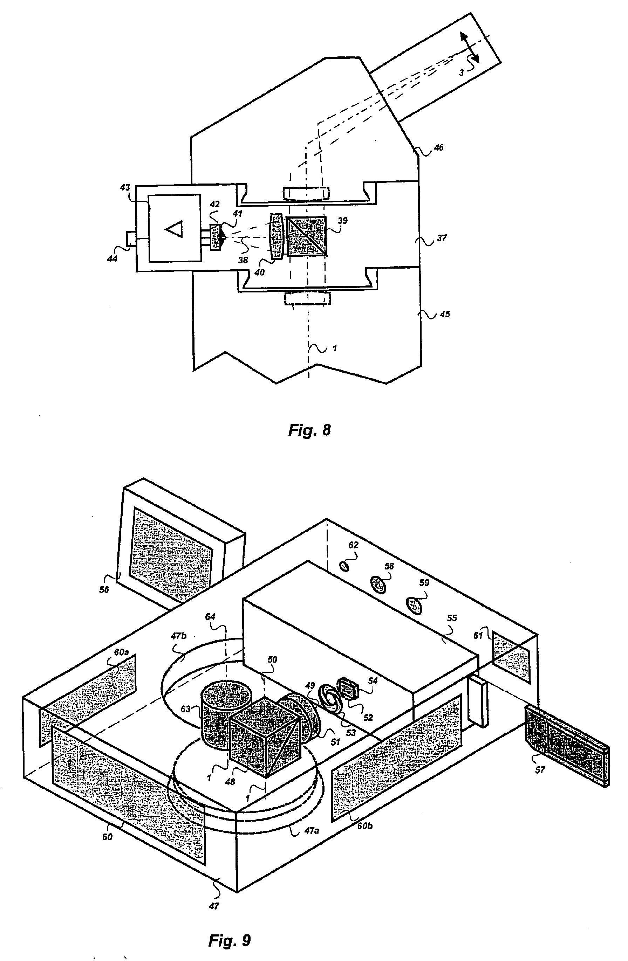

Ein Ausführungsbeispiel einer solchen Adaption zeigt ***Fig. 8.*** Der Zwischentubus ***37*** ist zwischen Mikroskopkörper ***45*** und Beobachtungstubus ***46*** eingesetzt. Im Zwischentubus ***37*** ist in einem der vom Körper des Stereomikroskops kommenden stereomikroskopischen Strahlengänge ***1*** ein Teilerprisma ***39*** angeordnet, dass einen Teil dieses Strahlenganges in den Kamerastrahlengang ***38*** umlenkt, wo eine unmittelbar nach dem Teilerprisma ***39*** angeordnete Optik ***40*** das Mikroskopzwischenbild ***3*** in eine auf der Sensoreintrittsfläche des CCD-Chips ***42*** liegende Kamerabildebene ***41*** verkleinernd abbildet. Die Ebenen von Mikroskopzwischenbild ***3*** und Kamerabildebene ***41*** sind parfokal. Das vom CCD-Chip ***42*** kommende Bildsignal wird in der ebenfalls integrierten Kamerasteuerung ***43*** bearbeitet und digitalisiert, dieses Videosignal kann am Video-Ausgang ***44*** abgegriffen werden.
Das mikroskopische Bild kann ohne zusätzlichen Video- bzw. Fototubus okularunabhängig auf dem Video-Monitor betrachtet und an Video-Printern ausgedruckt werden. Die digitale Bildbearbeitung am PC erfordert zusätzlich einen Rechner mit Frame Grabber, eine einfache Digitale Mikrofotografie ist nicht möglich.

Der Erfindung liegt daher die Aufgabe zugrunde, die Nachteile des Standes der Technik zu überwinden und eine einfache und kompakte Anordnung zur Realisierung der digitalen Fotografie insbesondere für Stereomikroskope anzugeben.

Diese Aufgabe wird durch die im Patentanspruch 1 gekennzeichneten Merkmale gelöst, vorteilhafte Weiterentwicklungen sind in den unabhängigen Ansprüchen angegeben.

Die Anordnung besteht erfindungsgemäß aus einen direkt zwischen Mikroskopkörper und Beobachtungstubus einzusetzenden Stereomikroskop-Zwischentubus mit integriertem Umlenkelement, das den Strahlengang eines Stereokanals in den ebenfalls integrierten Kamerastrahlengang lenkt, wo eine Optik das Mikroskozwischenbild auf einen CCD-Chip oder auf einen CCD-Chips adäquaten Sensor (z.B. C-MOS-Sensor) verkleinernd abbildet, und einer das Kamerasignal digitalisierenden Kamerasteuerung, die okularunabhängig ohne zusätzlichen Video-/Fototubus ein digitales Zoomen des Bildes, die Wiedergabe des Bildes auf einem am Zwischentubus angeordneten LCD-Monitor, die Digitale Fotografie des Bildes auf einem im Zwischentubus einschiebbaren und am PC lesbaren Speichermedium, die Ausgabe des Bildes über eine geeigneten Videoausgang und eine PC-kompatible Schnittstelle ermöglicht.

Nach einer bevorzugten Ausführungsform der vorliegenden Erfindung ist in einem der stereomikroskopischen Strahlengänge ein Umlenkelement angeordnet bzw. einschaltbar, das diesen Strahlengang vollständig oder einen Teil davon zu einer Abbildungsoptik lenkt, die das mikroskopische Zwischenbild des Stereozooms auf den CCD-Chip einer Digitalen Kompaktkameras analogen Steuerelektronik verkleinernd, formatumschreibend und optimiert für die Lagen der Austrittspupillen des Stereozooms abbildet. Die CCD-Chip-Leiterplatte ist mit einer das Kamerasignal verarbeitenden digitalisierenden Steuerelektronik verbunden, die analog der Steuerelektronik einer Digitalen Kompaktkamera (z.B. Sony DSC-F707) ausgeführt ist, und es somit ermöglicht, wie von Digitalen Kompaktkameras her bekannt auch am Stereomikroskop-Zwischentubus mit integriertem Kamerateil Setup- und Funktionseinstellungen vorzunehmen, das mikroskopische Bild digital zu zoomen und auf einem am Zwischentubus schwenk- und/oder kippbar angeordneten LCD-Monitor darzustellen, das mikroskopische Bild auf einem im Zwischentubus einschiebbaren und am PC lesbaren Speichermedium (z.B. Memory Stick) zu speichern, und die Bilddaten zur Bildwiedergabe auf einem Video-Monitor bzw. Video-Printer auf einem geeigneten Videoausgang bzw. zur Bildwiedergabe/ -bearbeitung auf am Computer an einer geeigneten PC-kompatiblen Schnittstelle (z.B. USB) abzugreifen. In dem zweiten, nicht zur Kamera abgelenkten stereomikroskopischen Strahlengang ist bei einer Teilung im ersten Kamerastrahlengang ein Element angeordnet bzw. einschaltbar, das die Transmission bzw. den Glasweg im Kamerastrahlengang ausgleicht.

Bevorzugte Ausführungsbeispiele der Erfindung werden anhand der Zeichnungen ***Fig.9*** bis ***Fig.12*** näher erläutert. Es zeigt
***Fig.9*** das Prinzip des Stereomikroskop-Zwischentubus mit integriertem Kamerateil, bei der einer der stereomikroskopischen Strahlengänge mit einem feststehenden Teilerprisma in den fotografischen Strahlengang umlenkt wird und der CCD-Kamerasensor in diesem einen umgelenkten stereomikroskopischen Strahlengang angeordnet ist,
***Fig. 10*** wie in ***Fig. 9*** das Prinzip des Stereomikroskop-Zwischentubus mit integriertem Kamerateil, bei der allerdings der eine stereomikroskopische Strahlengang mit einer feststehenden Teilerplatte in den fotografischen Strahlengang umlenkt wird,
***Fig. 11a*/*11b*** wie in ***Fig. 9*** das Prinzip des Stereomikroskop-Zwischentubus mit integriertem Kamerateil, bei der allerdings der eine stereomikroskopische Strahlengänge mit einem einschaltbaren Spiegel in den fotografischen Strahlengang umlenkt wird,
***Fig.12*** das Prinzip des Stereomikroskop-Zwischentubus mit integrierten Kamerateilen für 3D-Betrachtung, bei dem beide stereomikroskopischen Strahlengänge mit feststehenden Teilerprismen in die Kamerastrahlengänge umlenkt werden und jeweils ein CCD-Kamerasensor in den Kamerastrahlengängen angeordnet ist.

Nachstehend folgt die detaillierte Beschreibung des Stereomikroskop-Zwischentubus mit integriertem Kamerateil, wobei auf die ***Fig. 9*** Bezug genommen wird.

Einer der vom Körper des Stereomikroskops kommenden stereomikroskopischen Strahlengänge ***1*** läuft von unten im Stereomikroskop-Zwischentubus ***47*** in ein Teilerprisma ***48,*** wo dieser in den fotografischen Strahlengang ***49*** und in den in der Achse des einfallenden Strahlengangs ***1*** wieder aus dem Stereomikroskop-Zwischentubus ***47*** austretenden Strahlengang ***50*** geteilt wird. Im fotografischen Strahlengang ***49*** ist nach dem Teilerprisma ***48*** eine Abbildungsoptik ***51*** angeordnet, die ein verkleinertes mikroskopisches Zwischenbild des Stereozooms ***52*** durch ein Blenden-Nerschlusssystem ***53*** auf den CCD-Chip ***54*** einer integrierten Digitalen Kompaktkameras analogen Steuerelektronik ***55*** abbildet, wobei das Blenden-Nerschlusssystem ***53*** und der CCD-Chip ***54*** zur integrierten Digitalen Kompaktkame-ras analogen Steuerelektronik ***55*** gehören. Die Bildsignale werden in der Digitalen Kompaktkameras analogen Steuerelektronik ***55*** so bearbeitet, dass das mikroskopische Bild digital gezoomt, auf einem am Zwischentubus ***47*** schwenk- und kippbar angeordneten LCD-Monitor ***56*** dargestellt, und auf einem im Zwischentubus einschiebbaren, am PC lesbaren Spechermedium ***57*** gespeichert werden kann, und dass die Bildsignale an einem Videoausgang ***58*** und einer PC-kompatiblen Schnittstelle ***59*** abgegriffen werden können. Über Elemente in den Bedienfeldern ***60, 60a*** und ***60b*** erfolgt das Setup, die Einstellung der Funktionsparameter der Digitalen Kompaktkameras analogen Steuerelektronik ***55,*** und die Auslösung der Digita-len Belichtung. Die Spannungsversorgung des Kamerateils erfolgt über die BUS-Schnittstelle ***61***, welche bevorzugt eine CAN-Bus-Schnittstelle (CAN = Controller Area Network) sein kann, über die auch die Belichtung digitaler Aufnahmen von einem zentralen Steuerteil ausgelöst werden kann. Bezugsziffer 62 bezeichnet die Buchse zum Anschluss von Fotozubehör am Stereomikroskop-Zwischentubus ***47***. Der andere der vom Körper des Stereomikroskops kommenden stereomikroskopischen Strahlengänge ***1*** durchläuft einen dem Glasweg des Teilerprismas ***48*** entsprechenden Glaskörper ***63***, in dem die Lichtintensität soweit reduziert wird, dass der aus dem Glaskörper ***63*** austretende Strahlengang ***64*** die gleiche Lichtintensität hat wie der andere aus dem Stereomikroskop-Zwischentubus ***47*** austretende Strahlengang ***50.***
Bezugsziffer ***47a*** bezeichnet die Ringschwalbe zum Einsetzen des Stereomikroskop-Zwischentubus ***47*** im Mikroskopkörper, Bezugsziffer ***47b*** bezeichnet die Ringschwalbenaufnahme zum Einsetzen des Beobachtungstubus im Stereomikroskop-Zwischentubus ***47***.

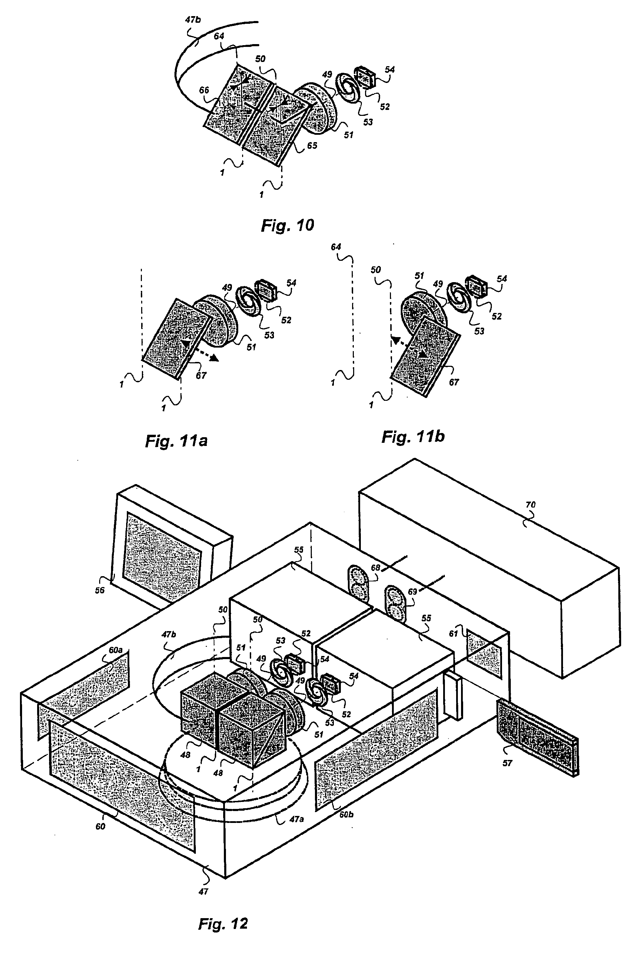

In ***Fig.10*** und ***Fig.11*** sind zwei andere Varianten zur Auskopplung des Fotostrahlengangs im Stereomikroskop-Zwischentubus dargestellt. In ***Fig. 10*** wird einer der stereomikroskopischen Strahlengänge ***1*** durch eine feststehende Teilerplatte ***64*** in fotografischen Strahlengang ***49*** und austretenden Strahlengang ***50*** geteilt; durch die 45°-Stellung der Teilerplatte ***65*** hat der austretende Strahlengang ***50*** zum eintretenden stereomikroskopischen Strahlengang ***1*** den axialen Versatz ***v,*** auf den die Mitte der Ringschwalbenaufnahme ***47b*** zum Einsetzen des Beobachtungstubus justiert ist. Der andere stereomikroskopische Strahlengang ***1*** durchläuft eine feststehende, 45°geneigte und dem Glasweg der Teilerplatte ***65*** entsprechende Glasplatte ***66,*** die ebenfalls den axialen Versatz ***v*** zwischen eintretenden und austretenden stereomikroskopischen Strahlengang (***1*** / **64**) bewirkt, und in der die Lichtintensität soweit reduziert wird, dass der austretende Strahlengang ***64*** die gleiche Lichtintensität hat wie der andere geteilte, austretende Strahlengang ***50.*** In ***Fig. 11a*** wird einer der stereomikroskopischen Strahlengänge ***1*** durch den eingeschalteten 90°-Spiegel ***67*** mit voller Lichtintensität in den fotografischen Strahlengang ***49*** gelenkt, und in ***Fig. 11b*** ist dieser stereomikroskopische Strahlengang ***1*** auch der austretende Strahlengang ***50*** ; die Lichtintensitäten der austretenden Strahlengänge ***50*** und ***64*** sind gleich, im anderen stereomikroskopischen Strahlengang ***1*** sind keine optischen Bauelemente erforderlich.

In ***Fig.12*** wird das Prinzip des Stereomikroskop-Zwischentubus mit zwei integrierten Kamerateilen für 3D-Betrachtung mit Shutterbrille oder Polarisationsbrille bzw. mit brillenloser, autostereoskopische Bildwiedergabe, beschrieben.
Beide vom Körper des Stereomikroskops kommenden stereomikroskopischen Strahlengänge ***1*** laufen von unten im Stereomikroskop-Zwischentubus ***47*** in je ein Teilerprisma ***48,*** wo diese in die fotografischen Strahlengänge ***49*** zur Kamera und in die in den Achsen der einfallenden Strahlengänge ***1*** wieder aus dem Stereomikroskop-Zwischentubus ***47*** austretenden Strahlengänge ***50*** geteilt werden. In den fotografischen Strahlengängen ***49*** sind nach den Teilerprismen ***48*** Abbildungsoptiken ***51*** angeordnet, die die verkleinerten mikroskopischen Zwischenbilder des Stereozooms ***52*** durch ein Blenden-/Verschlusssystem ***53*** auf die CCD-Chips ***54*** der zu jedem Strahlengang gehörenden integrierten Digitalen Kompaktkameras analogen Steuerelektroniken ***55*** abbildet, wobei das Blenden-Nerschlusssystem ***53*** und die CCD-Chip ***54*** jeweils zur integrierten Digitalen Kompaktkameras analogen Steuerelektronik ***55*** gehören. Die Bildsignale werden in der Digitalen Kompaktkameras analogen Steuerelektronik ***55*** so bearbeitet, dass das mikroskopische Bild eines fotografischen Strahlenganges auf einem am Zwischentubus ***47*** schwenk- und kippbar angeordneten LCD-Monitor ***56*** dargestellt, und auf einem im Zwischentubus einschiebbaren, am PC lesbaren Speichermedium 57 gespeichert werden kann; dass das mikroskopische Bild beider fotografischen Strahlengänge digital gezoomt werden kann, und dass die Signale der Bilder aus beiden fotografischen Strahlengängen paarweise an Videoausgängen ***68*** und PC-kompatiblen Schnittstellen ***69*** zur Verarbeitung in der 3D-Betrachtungs-Einheit ***70*** abgegriffen werden können. Wie in ***Fig. 9*** bezeichnen die Bezugsziffern ***60, 60a*** und ***60b*** die Bedienfelder für Setup und die Einstellung der Funktionsparameter, die Bezugsziffer ***61*** die CAN-BUS-Schnittstelle mit Spannungsversorgung und externem Auslösesignal, die Bezugsziffer ***47a*** die Ringschwalbe zum Einsetzen des Stereomikroskop-Zwischentubus ***47*** im Mikroskopkörper, und die Bezugsziffer ***47b*** die Ringschwalbenaufnahme zum Einsetzen des Beobachtungstubus im Stereomikroskop-Zwischentubus ***47***.

Wie aus der voranstehenden Beschreibung ersichtlich, ist diese Lösung für den Anwender besonders vorteilhaft, da mit dem zwischen Mikroskopkörper und Beobachtungstubus einzusetzenden Stereomikroskop-Zwischentubus das mikroskopische Bild okularunabhängig ohne zusätzliche Video-/Fototubus-Aufbauten auf einem am Zwischentubus angeordneten LCD-Monitor wiedergegeben, digital gezoomt, auf einem im Zwischentubus einschiebbaren und am PC lesbaren Speichermedium digital fotografiert, für die Wiedergabe auf Video-Monitoren und -Printern sowie für die Digitale Bildbearbeitung am PC bereitgestellt und beschrieben werden kann. Das Bildwiedergabesystem ist im Zwischentubus integriert, die Kameras brauchen nicht mehr außen angesetzt zu werden. Die Wiedergabe des mikroskopischen Bildes auf einem am Zwischentubus angeordneten LCD-Monitor bietet die Möglichkeit der monokularen bzw. okularlosen Beobachtung. Mit dieser Lösung ist es möglich die Integration von Bildaufnahmesystemen in stereomikroskopischen Bauteilen zu realisieren. Weiter hat die Erfindung den Vorteil, dass die Abbildung des mikroskopischen Zwischenbildes vom Stereozoom entsprechend der Größe des CCD-Chips formatumschreibend und für die Lagen der Austrittspupillen des Stereozooms optimiert ist.

Die Realisierung der Erfindung ist nicht an die dargestellten Ausführungsbeispiele gebunden, fachmännische Weiterentwicklungen führen nicht zu einem Verlassen des Schutzbereichs der Patentansprüche.
Insbesondere sind neben CCD-Chips auch andere digitale Bildaufnahmesensoren wie z.B. CMOS-Chips einsetzbar, auch die integrierte Bilddarstellung kann auf anderen Prinzipien, z.B. OLEDs o.ä., beruhen.

## Patentansprüche

1. Mikroskop-Zwischentubus mit integriertem Kamerateil, der direkt zwischen einen Mikroskopkörper und Beobachtungstubus einsetzbar ist, mit einem in einem der mikroskopischen Strahlengänge fest angeordneten bzw. einschaltbaren Umlenkelement, das diesen Strahlengang vollständig oder einen Teil davon zu einer Abbildungsoptik lenkt, die das mikroskopische Zwischenbild auf einen Bildaufnahme-Chip abbildet, wobei der Mikroskop-Zwischentubus eine Steuerelektronik für den Bildaufnahme-Chip, eine Bilddatenaufbereitungseinheit und eine Bilddarstellungseinheit enthält.

2. Mikroskop-Zwischentubus nach Anspruch 1 mit einer Datenschnittstelle und/oder einer Schnittstelle für ein externes Speichermedium.

3. Mikroskop-Zwischentubus nach Anspruch 1 oder 2 mit einer Steuer- und Bedieneinheit zur Einstellung von Aufnahmeparametern bzw. Darstellungsparametern und/oder der Auslösung von Bildaufnahmen.

4. Mikroskop-Zwischentubus nach Anspruch 1, 2 oder 3 für den Einsatz in einem Stereomikroskop mit zwei Beobachtungsstrahlengängen, wobei mindestens einer der Beobachtungsstrahlengänge von dem Umlenkelement auf den Bildaufnahme-Chip gelenkt wird.

5. Mikroskop-Zwischentubus für eine Stereomikroskop nach Anspruch 4, wobei den beiden Beobachtungsstrahlengängen je ein Umlenkelement zugeordnet ist, welche den Beobachtungsstrahlengang auf einen oder mehrere Bildaufnahme-Chips lenken.

6. Mikroskop-Zwischentubus für eine Stereomikroskop nach Anspruch 5, wobei an einer Datenschnittstelle bzw. einer Schnittstelle für ein externes Speichermedium Bilddaten der beiden Beobachtungsstrahlengänge ausgebbar sind.

7. Mikroskop-Zwischentubus für eine Stereomikroskop nach Anspruch 6, wobei an der Datenschnittstelle ein System zur digitalen 3D-Darstellung anschließbar ist.
